# EUROPEAN PATENT APPLICATION

(11) **EP 3 419 305 A1**
(43) Date of publication of application: **26.12.2018**
(21) Application number: 18178399.4
(22) Date of filing: 19.06.2018
(51) Int. Cl.: H04Q 9/00

(54) **A PRODUCT WHICH CAN COMMUNICATE WITH A MOBILE DEVICE**

(30) Priority: 20.06.2017 TR 201709137
(71) Applicant: Arzum Elektrikli Ev Aletleri Sanayi Ve Ticaret Anonim Sirketi, Istanbul (TR)
(72) Inventor: YILDIZ, Mehtap, Istanbul (TR); CETIN, Recep, 34050 Istanbul (TR)
(74) Representative: Kaya, Erdem

(57) **Abstract**

The present invention is a vacuum deaner (10) having a drive item (110) which moves a fan (111) provided on an air flow path (102) between an input opening (101) and an output opening (103) and which provides air flow from the input opening (101) towards the output opening (103), and a dust filter (130) positioned on said air flow path (102) and which provides at least partially filtering of the particles in the air passing through the air flow path (102). Accordingly, the subject matter vacuum cleaner (10) is characterized by comprising a current sensing unit (150) embodied in a manner measuring the current drawn by the drive item (110) from a power supply (160) electrically connected to said drive item (110) and in a manner transferring the signal, related to this current value, to a processor unit (141): a communication unit (142) embodied In a manner providing wireless data exchange of said processor unit (141) and a mobile device (20); and said processor unit (141) is embodied in a manner comparing the current value. drawn by the drive Item (110), with the predetermined calculated reference values and in a manner determining a filter fullness value and In a manner transferring the filter fullness value to said mobile device (20).

## Description

### TECHNICAL FIELD

The present invention relates to a vacuum cleaner having a drive item which moves a fan provided on an air flow path between an input opening and an output opening and which provides air flow from the input opening towards the output opening, and a dust filter positioned on said air flow path and which provides at least partially filtering of the particles in the air passing through the air flow path, a filter control system comprising this vacuum cleaner and a filter control method applied by means of this system.

### PRIOR ART

Vacuum cleaners create vacuum by means of motor and draw the dust and filter the dust through a filter and retain the dust in a dust chamber. However, dust filters may get clogged and this leads to slogging of the motor for providing air circulation and even damaging of the motor. In the present system, there are systems which measure the temperature in the vicinity of the motor and which determine fullness and which warn the user by means of a display provided on the vacuum cleaner. However, in hot weather conditions, wrong results may occur on the display or vacuum cleaning may be continued without being aware of the filter fullness level and this may lead to damaging of the motor.

As a result, because of all of the abovementioned problems. an improvement is required in the related technical field.

### BRIEF DESCRIPTION OF THE INVENTION

The present invention relates to a vacuum cleaner a filter control system comprising this vacuum cleaner and a method applied by means of the filter control system, for eliminating the above mentioned disadvantages and for bringing new advantages to the related technical field.

An object of the present invention is to prevent damaging of the motor due to filling of the dust filter in vacuum cleaners

Another object of the present invention is to provide a vacuum cleaner which facilitates control of the condition of the dust filter and a system comprising this vacuum cleaner and a method where this system is applied.

In order to realize all of the abovementioned objects and the objects which are to be deducted from the detailed description below, the present invention is a vacuum cleaner having a drive item which moves a fan provided on an air flow path between an input opening and an output opening and which provides air flow from the input opening towards the output opening, and a dust filter positioned on said air flow path and which provides at least partially filtering of the particles in the air passing through the air flow path. Accordingly, the subject matter vacuum cleaner is characterized by comprising a current sensing unit embodied in a manner measuring the current drawn by the drive item from a power supply electrically connected to said drive item and in a manner transferring the signal, related to this current value, to a processor unit; a communication unit embodied in a manner providing wireless data exchange of said processor unit and a mobile device; and said processor unit is embodied in a manner comparing the current value, drawn by the drive item, with the predetermined calculated reference values and in a manner determining a filter fullness value and in a manner transferring the filter fullness value to said mobile device. Thus, the filter condition is instantaneously transmitted to the external unit and the user is informed about the filter condition. Moreover, since the filter fullness condition is realized through the current drawn by the motor, it is not affected by the environmental factors and it reflects the real operation condition of the motor.

In a preferred embodiment of the present invention, said current sensing unit comprises an ammeter.

In another preferred embodiment of the present invention, a dust chamber is provided which is connected to the dust filter

In another preferred embodiment of the present invention, a user interface is provided.

In another preferred embodiment of the present invention, a memory unit is provided where said reference values are accommodated.

In another preferred embodiment of the present invention, said communication unit is embodied so as to be connected to a wireless network. Thus, communication can be provided by means of a wireless network provided in the usage area of the vacuum cleaner.

In another preferred embodiment of the present invention, said communication unit is embodied so as to realize data exchange by means of bluetooth protocol.

The present invention is moreover a filter control system comprising a vacuum cleaner as above and at least one mobile device. Accordingly, when the filter fullness value, received from the processor unit, exceeds a first threshold value, said mobile device is embodied in a manner providing warning to the user visually, aurally or by means of vibration.

In another preferred embodiment of the present invention, the processor unit of the vacuum cleaner is moreover embodied in a manner selectively starting/stopping the operation of the drive item.

In another preferred embodiment of the present invention, said mobile device is embodied in a manner sending command to the processor unit for stopping the drive item when the filter fullness value, received from the processor unit, exceeds a second threshold value. Thus, damaging of the drive item is automatically prevented.

In another preferred embodiment of the present invention, said mobile device is a smart phone, laptop computer, smart watch or tablet computer.

In another preferred embodiment of the present invention, a wireless access point is provided for providing communication of the mobile device and the vacuum cleaner.

The present invention is moreover a method for controlling the dust filter fullness of a vacuum cleaner. Accordingly, the improvement is that the subject matter method comprises the following steps:
- measuring the current, drawn by the drive item of a vacuum cleaner from a power supply which is electrically connected with the drive item, by a current sensing unit and transmitting the signal, related to this current value, to a processor unit,
- comparing the value of the current, drawn by said drive item, with pre-calculated reference values by said processor unit and determining the filter fullness value,
- sending the filter fullness value to a mobile device.

In another preferred embodiment of the present invention, the following sub-step is provided: matching said processor unit and said mobile device so as to identify and communicate with each other automatically by means of a communication unit of the vacuum cleaner when said processor unit and said mobile device enter Into communication ranges of each other. Thus, the usage of the vacuum cleaner and of the mobile device in filter control is facilitated.

In another preferred embodiment of the present invention, the step of "matching said processor unit and said mobile device so as to identify and communicate with each other automatically by means of a communication unit of the vacuum cleaner when said processor unit and said mobile device enter into communication ranges of each other" comprises the sub-step of connecting the processor unit to a wireless network.

In another preferred embodiment of the present Invention, the matching process In the step of "matching said processor unit and said mobile device so as to identify and communicate with each other automatically by means of a communication unit of the vacuum cleaner when said processor unit and said mobile device enter into communication ranges of each other" is realized through bluetooth protocol.

### BRIEF DESCRIPTION OF THE FIGURES

Figure 1 is a representative view of the vacuum cleaner filter control system.
Figure 2 is a representative view of the vacuum cleaner.
Figure 3 is a more detailed view of the control unit.

### DETAILED DESCRIPTION OF THE INVENTION

In this detailed description, the subject matter is explained with references to examples without forming any restrictive effect only in order to make the subject more understandable.

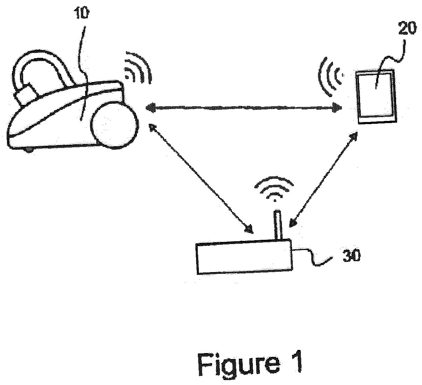

With reference to Figure 1. the present invention is essentially a vacuum cleaner (10) which transmits the filter fullness value to a mobile device (20) and which informs the user, a system comprising this vacuum cleaner (10) and a vacuum cleaner filter control method realized by means of this system

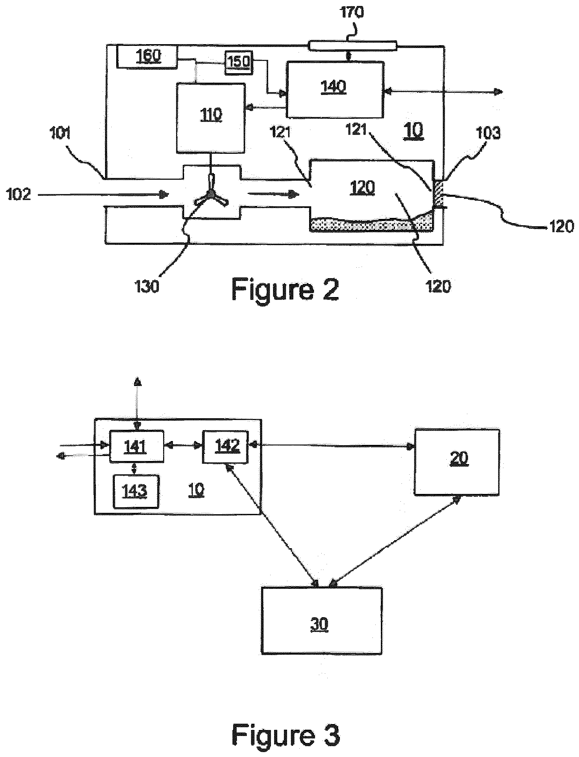

With reference to Figure 2, in more details, said vacuum cleaner (10) comprises a body (100). Said body (100) comprises an air flow (102) path provided between an input opening (101) and an output opening (103) The vacuum cleaner (10) moreover comprises a drive item. In this exemplary embodiment, said drive item is a motor. The drive item (110) is connected to a power supply (160) and operates by means of drawing current from this power supply (160). Said power supply (160) can be a battery or it can be an element which can be connected to the mains supply. Said drive item rotates a fan (111) positioned on the air flow path (102). When said fan (111) rotates, an air flow takes place from the input opening (101) towards the output opening (103). The vacuum cleaner (10) also comprises a dust chamber (120). The dust chamber (120) is also positioned on the air flow path (102). There are at least two openings (121) wherein air enters and through which air exits.

The dust chamber (120) is connected to a dust filter (130) positioned in a manner closing the opening (121) where air exits. Said dust filter (130) has a perforated structure. Thus, it permits air passing therethrough, however, it does not permit passing of particles, which move together with air, through the holes. Thus, the particles caught by the dust filter (130) are retained inside the dust chamber (120). In this exemplary embodiment, the fan (111) is positioned between the input opening (101) and the dust chamber (120). However, it can also be positioned between the dust chamber (120) and the output opening (103).

The vacuum cleaner (10) comprises a current sensing unit (150). The current sensing unit (150) is connected to the motor The current sensing unit (150) measures the current drawn by the motor from the power supply (160) and generates a signal describing this current. The current sensing unit (150) transmits the generated signal to a control unit (140). The control unit (140) evaluates this signal and sends message to a mobile device (20) by means of a communication unit (142). In this exemplary embodiment, the communication unit (142) is configured to be able to communicate with the bluetooth protocol. The communication unit (142) is also embodied so as to be connected to a wireless network, in other words, so as to communicate with a wireless access point (30). The wireless access point (30) may be a modem.

The vacuum cleaner (10) may also comprise a user interface (170). Said user interface (170) may also comprise a screen or a display which gives warning signals to the user, and it may also comprise input units in order to provide data inputs of the user for selecting the operation mode of the machine or for sending data to the control unit (140) for another purpose. These input units may be touch-screen, button, etc.

In more details, the control unit (140) comprises a processor unit (141). The processor unit (141) is connected to the drive item (110) so as to start/stop operation of the drive item (110). The processor unit (141) may be connected to a memory unit (143). The memory unit (143) may also comprise the command lines for execution of the processor unit (141) and the threshold values, reference values used by the processor unit (141) while executing these commands.

Depending on the clogging degree of the dust filter (130), the drive item (110) draws more current when compared with the power supply (160) for providing air flow.

The processor unit (141) compares the signal, received from the current sensing unit (150) and which is related to the current drawn by the drive item (110) from the power supply (160), with the reference values in the memory unit (143). A filter fullness value is determined depending on these reference values. The processor unit (141) transmits the filter fullness value to the mobile device (20) by means of the communication unit (142). The transfer of this value to the mobile device (20) can be realized by means of radio waves. In this exemplary embodiment, the processor unit (141) is connected to the same wireless network as the mobile device (20) and the processor unit (141) transfers data to the mobile device (20) by means of this wireless network (wi-fi network). In more details, it can be connected to a wireless network provided by a wireless access point (30).

Said mobile device (20) can be a smart phone, tablet computer, laptop computer, smart watch, etc. The mobile device (20) may comprise software or application in order to evaluate the data received from the vacuum cleaner (10) and In order to realize process accordingly. By means of this, the mobile device (20) can present the filter fullness value, received from the processor unit (141), to the user. This presentation can be realized visually, aurally or by means of vibration via an application. When the filter fullness value exceeds a first threshold value, additional warning can be given to user aurally (alarm), visually (flashing light, etc.) or by means of vibration. Thus, the user can receive the information that the fullness of the dust filter (130) is at a critical level and the user can stop the vacuum cleaning process and can prevent damaging of the drive item (110).

In a possible embodiment, the mobile device (20) can send a command or message which notifies the processor unit (141) to stop the drive item (110) when the filter fullness value, received from the processor unit (141), exceeds a second threshold value. The processor unit stops the drive item until re-start command is given through the user interface (170) or from the mobile device (20).

In order to provide communication of the mobile device (20) and the vacuum cleaner (10). first of all, the mobile device (20) and the vacuum cleaner (10) are matched When the mobile device (20) and the vacuum cleaner (10) save the unique identity numbers of each other and when they enter within the communication range of each other or when they are connected to the same network, they can automatically communicate. After the mobile device (20) and the vacuum cleaner (10) are matched, the vacuum cleaner (10) is connected to a wireless network and it stays continuously connected to this network. Thus, in case of usage, filter filling value can be instantaneously transmitted to the mobile device (20).

In a possible embodiment, the processor unit (141) stops operation of the drive item (110) when the filter filling value exceeds the second threshold value.

The protection scope of the present invention is set forth in the annexed Claims and cannot be restricted to the illustrative disclosures given above, under the detailed description. It is because a person skilled In the relevant art can obviously produce similar embodiments under the light of the foregoing disclosures, without departing from the main principles of the present invention.

### REFERENCE NUMBERS

10 Vacuum cleaner
   100 Body
   101 Input opening
   102 Air flow path
   103 Output opening
   110 Drive item
   111 Fan
   120 Dust chamber
      121 Opening
   130 Dust filter
   140 Control unit
      141 Processor unit
      142 Communication unit
      143 Memory unit
   150 Current detection unit
   160 Power supply
   170 User interface
20 Mobile device
30 Wireless access point

## Claims

1. A vacuum cleaner (10) having a drive item (110) which moves a fan (111) provided on an air flow path (102) between an input opening (101) and an output opening (103) and which provides air flow from the input opening (101) towards the output opening (103), and a dust filter (130) positioned on said air flow path (102) and which provides at least partially filtering of the particles in the air passing through the air flow path (102), **characterized by** comprising a current sensing unit (150) embodied in a manner measuring the current drawn by the drive item (110) from a power supply (160) electrically connected to said drive item (110) and in a manner transferring the signal, related to this current value, to a processor unit (141); a communication unit (142) embodied in a manner providing wireless data exchange of said processor unit (141) and a mobile device (20); and said processor unit (141) is embodied in a manner comparing the current value, drawn by the drive item (110), with the predetermined calculated reference values and in a manner determining a filter fullness value and In a manner transferring the filter fullness value to said mobile device (20).

2. A vacuum cleaner (10) according to claim 1, wherein a dust chamber (120) is provided which is connected to the dust filter (130).

3. A vacuum cleaner (10) according to claim 1, wherein a user interface (170) is provided.

4. A vacuum cleaner (10) according to claim 1, wherein a memory unit (143) is provided where said reference values are accommodated.

5. A vacuum cleaner (10) according to claim 1, wherein said communication unit (142) is embodied so as to be connected to a wireless network.

6. A vacuum cleaner (10) according to claim 1, wherein said communication unit (142) is embodied so as to realize data exchange by means of bluetooth protocol.

7. A filter control system comprising a vacuum cleaner (10) according to claim 1 and comprising at least one mobile device (20), wherein when the filter fullness value, received from the processor unit (141), exceeds a first threshold value, said mobile device (20) is embodied in a manner providing warning to the user visually, aurally or by means of vibration.

8. A filter control system according to claim 7, wherein the processor unit (141) of the vacuum cleaner (10) is moreover embodied in a manner selectively starting/stopping the operation of the drive item (110).

9. A filter control system according to claim 8. wherein said mobile device (20) is embodied in a manner sending command to the processor unit (141) for stopping the drive item (110) when the filter fullness value, received from the processor unit (141), exceeds a second threshold value.

10. A filter control system according to claim 9. wherein said mobile device (20) is a smart phone, laptop computer, smart watch or tablet computer

11. A filter control system according to claim 9, wherein a wireless access point (30) is provided for providing communication of the mobile device (20) and the vacuum cleaner (10).

12. A method for controlling the dust filter (130) fullness of a vacuum cleaner (10), wherein the following steps are provided:
- measuring the current, drawn by the drive item (110) of a vacuum cleaner (10) from a power supply (160) which is electrically connected with the drive item (110), by a current sensing unit (150) and transmitting the signal, related to this current value, to a processor unit (141),
- comparing the value of the current, drawn by said drive item (110), with pre-calculated reference values by said processor unit (141) and determining the filter fullness value,
- sending the filter fullness value to a mobile device (20).

13. A method according to claim 12, wherein the following sub-step is provided:
- matching said processor unit (141) and said mobile device (20) so as to identify and communicate with each other automatically by means of a communication unit (142) of the vacuum cleaner (10) when said processor unit (141) and said mobile device (20) enter into communication ranges of each other.

14. A method according to claim 13, wherein the following sub-step Is provided after the step of "matching said processor unit (141) and said mobile device (20) so as to identify and communicate with each other automatically by means of a communication unit (142) of the vacuum cleaner (10) when said processor unit (141) and said mobile device (20) enter into communication ranges of each other":
- connecting the processor unit (141) to a wireless network.

15. A method according to claim 13 or 14, wherein the matching process in the step of "matching said processor unit (141) and said mobile device (20) so as to identify and communicate with each other automatically by means of a communication unit (142) of the vacuum cleaner (10) when said processor unit (141) end said mobile device (20) enter into communication ranges of each other is realized through bluetooth protocol.
